# EUROPEAN PATENT APPLICATION

(11) **EP 2 487 826 A2**
(43) Date of publication of application: **15.08.2012**
(21) Application number: 12167051.7
(22) Date of filing: 05.10.2009
(51) Int. Cl.: H04L 5/00

(54) **SIMULTANEOUS TRANSMISSION OF CONTROL INFORMATION**

(62) Divisional of application: 09783733.0
(71) Applicant: Nokia Siemens Networks Oy, 02610 Espoo (FI)
(72) Inventor: Lunttila, Timo, 02200 ESPOO (FI); Tiirola, Esa, 90450 Kempele (FI); Pajukoski, Kari, 90240 Oulu (FI); Hooli, Kari, 90540 Oulu (FI)
(74) Representative: Borgström, Markus

(57) **Abstract**

The invention relates to a configurer configured to configure a periodic transmission and an aperiodic transmission or a scheduling request indicator; a first combiner configured to combine the periodic transmission and the aperiodic transmission by using time division multiplexing, the time division multiplexing being carried out in a puncturing manner; a second combiner configured to combine the periodic transmission and the scheduling request indicator by using physical layer multiplexing in the case of a positive scheduling request indicator; and a transmitting unit configured to transmit as a localized transmission at least one of the combined transmissions

## Description

### Field

The invention relates to an apparatus, method, computer program and computer program embodied on a computer readable medium.

### Background

The following description of background art may include insights, discoveries, understandings or disclosures, or associations together with disclosures not known to the relevant art prior to the present invention but provided by the invention. Some such contributions of the invention may be specifically pointed out below, whereas other such contributions of the invention will be apparent from their context.

The evolvement of communications technologies, launching of different services attainable wirelessly, generally speaking a requirement for increased data rates, has lead to need to develop also the communication standards. One of the standards providing higher data rates is 3GPP long-term evolution (LTE) and 3GPP long-term evolution advanced (LTE-A). The response to the increasing requirements for wireless communications has brought along a need for larger feedback information payload sizes and new demands for feedback channels and multiplexing solutions.

### Brief description

According to another aspect of the present invention, there is provided an apparatus comprising: a configurer configured to configure a periodic transmission and an aperiodic transmission or a scheduling request indicator; a first combiner configured to combine the periodic transmission and the aperiodic transmission by using time division multiplexing, the time division multiplexing being carried out in a puncturing manner; a second combiner configured to combine the periodic transmission and the scheduling request indicator by using physical layer multiplexing in the case of a positive scheduling request indicator; and a transmitting unit configured to transmit as a localized transmission at least one of the combined transmissions.

According to yet another aspect of the present invention, there is provided a method comprising: configuring a periodic transmission and an aperiodic transmission or a scheduling request indicator; combining the periodic transmission and the aperiodic transmission by using time division multiplexing, the time division multiplexing being carried out in a puncturing manner; combining the periodic transmission and the scheduling request indicator by using physical layer multiplexing in the case of a positive scheduling request indicator; and transmitting as a localized transmission at least one of the combined transmissions.

According to yet another aspect of the present invention, there is provided an apparatus comprising: means for configuring a periodic transmission and an aperiodic transmission or a scheduling request indicator; means for combining the periodic transmission and the aperiodic transmission by using time division multiplexing, the time division multiplexing being carried out in a puncturing manner; means for combining the periodic transmission and the scheduling request indicator by using physical layer multiplexing in the case of a positive scheduling request indicator; and means for transmitting as a localized transmission at least one of the combined transmissions.

### List of drawings

Embodiments of the present invention are described below, by way of example only, with reference to the accompanying drawings, in which
Figure 1 illustrates an example of a system;
Figure 2 depicts flow charts;
Figures 3A-3B illustrate embodiments of an apparatus;
Figures 4A-4B show examples of multiplexer arrangements.

### Description of some embodiments

The following embodiments to be described are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The embodiments will be described with reference to the accompanying drawings, in which some, but not all embodiments of the invention are shown. Indeed, the invention may be embodied in many different forms and should not be construed as limited to the embodiments set forth herein.

Embodiments are applicable to any user device, such as a user terminal, server, node, corresponding component, and/or to any communication system or any combination of different communication systems that support required functionalities. The communication system may be a wireless communication system or a communication system utilizing both fixed networks and wireless networks. The protocols used, the specifications of communication systems, apparatuses, such as servers and user terminals, especially in wireless communication, develop rapidly. Such development may require extra changes to an embodiment. Therefore, all words and expressions should be interpreted broadly and they are intended to illustrate, not to restrict, embodiments.

In the following, different embodiments will be described using, as an example of an access architecture to which the embodiments may be applied, a radio access architecture based on LTE Advanced, LTE-A, that is based on OFDMA in a downlink and a single-carrier frequency-division multiple access SC-FDMA in an uplink, without restricting the embodiments to such an architecture, however.

In an Orthogonal frequency division multiplexing (OFDM) system, the available spectrum is divided into multiple orthogonal sub-carriers. In OFDM systems, available bandwidth is divided into narrower sub-carriers and data is transmitted in parallel streams. Each OFDM symbol is a linear combination of signals on each of the subcarriers. Further, each OFDM symbol is preceded by a cyclic prefix (CP), which is used to decrease Inter-Symbol Interference. Unlike in OFDM, SC-FDMA subcarriers are not independently modulated.

A NodeB needs to know channel quality of each user device and the preferred precoding matrices (and/or other multiple input-multiple output (MIMO) specific feedback information, such as channel quantization) over the allocated sub-bands to schedule transmissions to user devices. Required information is signalled to the NodeB.

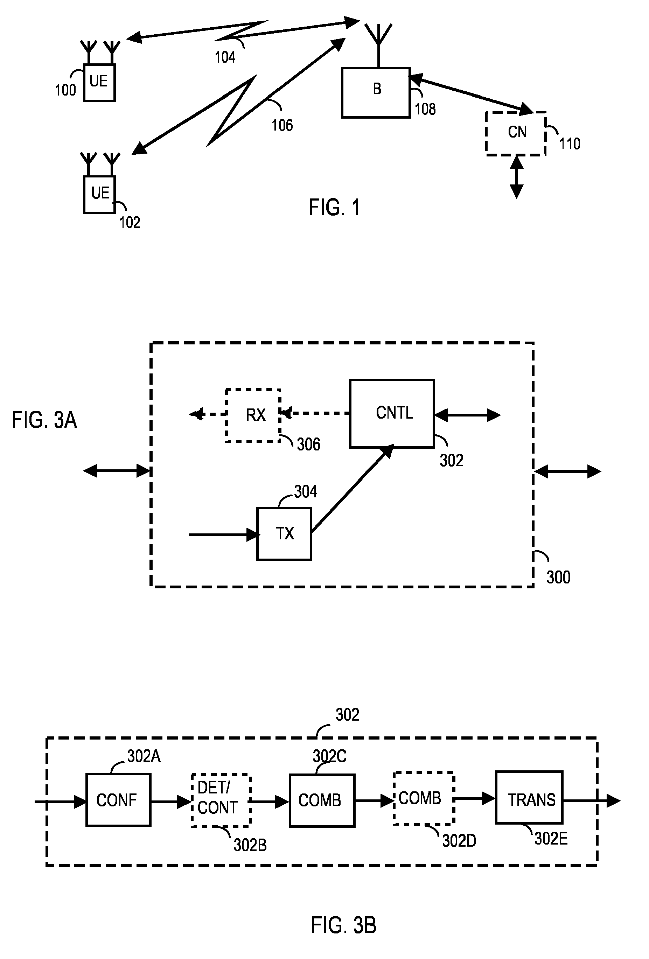

Figure 1 is a simplified system architecture only showing some elements and functional entities, all being logical units whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with the necessary properties.

Figure 1 shows a part of a radio access network of E-UTRA, LTE or LTE-A. E-UTRA is an air interface of Release 8. Some advantages obtainable by LTE (or E-UTRA) are a possibility to use plug and play devices, and Frequency Division Duplex (FDD) and Time Division Duplex (TDD) in the same platform.

Figure 1 shows user devices 100 and 102 configured to be in a wireless connection on one or more communication channels 104, 106 in a cell with a NodeB 108 providing the cell. The physical link from a user device to a NodeB is called uplink or reverse link and the physical link from the NodeB to the user device is called downlink or forward link.

The NodeB, or advanced evolved node B (eNodeB), is a computing device configured to control the radio resources of communication system it is coupled to. The NodeB may also be referred to a base station, an access point or any other type of interfacing device capable of operating in a wireless environment.

The NodeB or some other network element is typically further coupled to a core network (not shown). Depending on the system, the counterpart on the CN side may be a mobile services switching center (MSC), a media gateway (MGW) or a serving GPRS (general packet radio service) support node (SGSN), or a serving gateway (S-GW) etc.

The NodeB includes transceivers, for instance. From the transceivers of the NodeB, a connection is provided to an antenna unit that establishes bi-directional radio links to the user devices. The NodeB is further connected to a core network 110 (CN). Depending on the system, the counterpart on the CN side can be a serving system architecture evolution (SAE) gateway (routing and forwarding user data packets), packet data network gateway (PDN GW), for providing connectivity to user devices (UEs) to external packet data networks, or mobile management entity (MME).

The communication system is also able to communicate with other networks, such as a public switched telephone network or the Internet.

The user device illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station.

The user device refers to a portable computing device that includes wireless mobile communication devices operating with or without a subscriber identification module (SIM), including, but not limited to, the following types of devices: a mobile station (mobile phone), smartphone, personal digital assistant (PDA), handset, laptop computer, a game console, a notebook, and multimedia device.

The user device (or a layer 3 relay node) is configured to perform one or more of user equipment functionalities described below with an embodiment, and it may be configured to perform functionalities from different embodiments. The user device may also be called a subscriber unit, mobile station, remote terminal, access terminal, user terminal or user equipment (UE) just to mention but a few names or apparatuses.

It should be understood that, in the Figure, user devices are depicted to include two antennas only for the sake of clarity. The number of antennas may naturally vary according to a current implementation.

It is obvious for a person skilled in the art that the depicted system is only an example of a part of a radio access system and in practise, the system may comprise a plurality of NodeBs, the user device may have an access to a plurality of radio cells and the system may comprise also other apparatuses, such as physical layer relay nodes or other network elements.

Further, although the apparatuses have been depicted as single entities, different units, processors and/or memory units (not all shown in Figure 1) may be implemented in one or more physical of logical entities.

Embodiments are related to the 3GPP LTE-A, especially to Release 10 and the following releases, and Layer 1 (36.2XX) and Layer 2 (36.3XX) specifications. More precisely, the embodiments are in relation to optimization of uplink physical channels to support the feedback information payload sizes required by LTE-A and especially multiplexing options being connected to a periodic physical uplink shared channel (PUSCH) feedback channel and other uplink signals of LTE-A. Arranging a simultaneous transmission of periodic PUSCH and uplink signals defined in Release 8 violating as little as possible beneficial low cubic metric properties is an issue which needs careful consideration.

The LTE and LTE-A systems utilize various MIMO technologies including transmit diversity, single user (SU)-MIMO, multiuser (MU)-MIMO, closed-loop precoding, and dedicated beamforming.

The SU-MIMO scheme is applied to the Physical Downlink Shared Channel (PDSCH). There are two operation modes in SU-MIMO spatial multiplexing: the closed-loop spatial multiplexing mode and the open-loop spatial multiplexing mode.

MIMO indicates the use of multiple antennas at both the transmitter and receiver ends to improve communication performance (higher throughput, greater capacity, or improved reliability, or any combination thereof). It is usually classified into forms of smart antenna technology. MIMO systems can be divided in two classes: single-user MIMO, and multi-user MIMO. One target of the single-user MIMO (SU-MIMO) operation is typically to increase peak data rate per user device, whereas in multi-user MIMO (MU-MIMO), one target is typically to increase sector (or service cell) capacity. MIMO exploits spatial multiplexing to provide increased throughput and reliability, MU-MIMO exploits multi-user multiplexing (or multi-user diversity) to further gains in capacity. Additionally, MU-MIMO benefits from spatial multiplexing even when user equipment has a single reception antenna.

In the closed-loop spatial multiplexing mode, the NodeB applies spatial domain precoding to a transmitted signal on the basis of a precoding matrix indicator (PMI) signalled for a user device. To support the closed-loop spatial multiplexing in the downlink, the user device signals as a feedback a rank indicator (RI), a PMI, and a channel quality indicator (CQI) in the uplink. The RI indicates the number of spatial layers that can be supported. The NodeB may decide the transmission rank (number of antennas) taking into account the RI as well as other factors such as traffic pattern, available transmission power, etc. The CQI feedback indicates a combination of modulation scheme and a channel coding rate.

In the 3^{rd} generation partnership project (3GPP) LTE release 8, channel state information (CSI) feedback, namely channel quality information (CQI)/precoding matrix indicator (PMI) and rank indicator (RI) reporting may either be periodic or aperiodic. The baseline mode for channel information feedback reporting is periodic reporting using physical uplink control channel (PUCCH). The periodic channel information feedback is multiplied with uplink data on physical uplink shared channel (PUSCH). In addition to this periodic reporting, the NodeB can command the user device to send an aperiodic CQI report on physical uplink shared channel (PUSCH).

In the following, an embodiment of a method for simultaneous transmission is explained in more detail. The embodiment suits well to concurrent transmission of periodic and aperiodic PUSCH. It should be noted that in this application, dynamically or (semi)persistently scheduled uplink data which is transmitted on PUSCH is referred to as an aperiodic PUSCH and uplink control information is referred to as periodic PUSCH.

The embodiment provides multiplexing solutions for periodic PUSCH and other uplink channels especially in LTE-A. Configurability of uplink signalling priorities enables maintaining uplink coverage of the most critical uplink signals even in cell-edges.

In this application, term "localized" indicates no or small cubic metric increase in a manner defined in LTE-Release 8, and term "clustered" indicates increased cubic meter in a manner defined in LTE-Release 8.

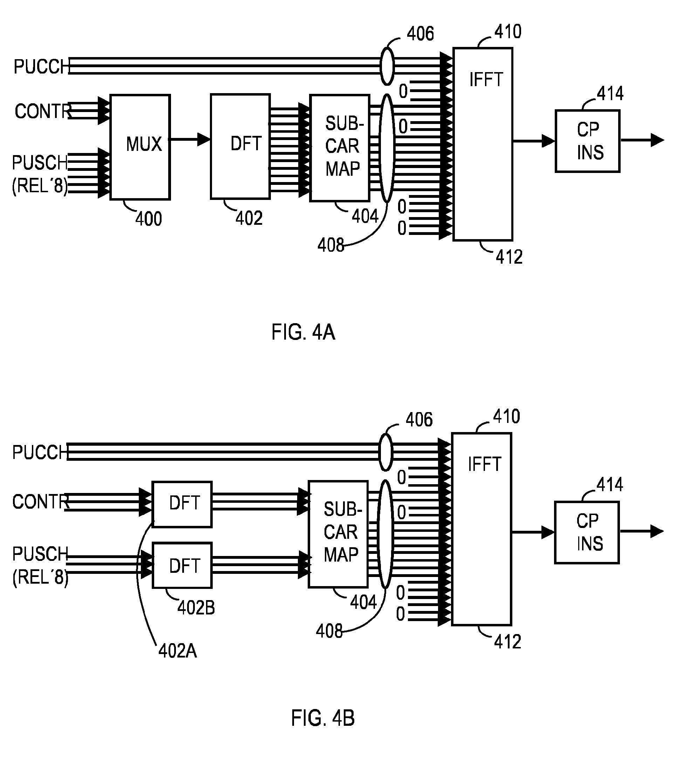

Figures 4A and 4B are rough schematic illustrations on examples of clustered transmission arrangements with serial and parallel multiplexing. It should be understood that the arrangements may also include other parts than the ones depicted in the Figures. The number of shown connections (depicted by arrows) is also not exact, but it may vary according to the implementation. Usually, more connections are provided, but only some of them are depicted for the sake of clarity.

Figure 4A illustrates an example of a multiplexing arrangement for clustered transmission with serial multiplexing. Block 400 is a multiplexer configured to multiplex periodic PUSCH (control) and aperiodic PUSCH (data) transmissions. The multiplexed signal is taken to a block 402 carrying out the discrete Fourier transform DFT. Then the transformed signals are mapped into frequency pins that is to say frequency domain resources are reserved corresponding to both periodic and aperiodic PUSCH resources (in block 404).

Reference number 406 depicts control signals and reference number 408 depicts data and control signals.

In block 410 the signals are inverse fast Fourier transformed.

In block 414 a cyclic prefix is added to the signal before it is taken to radio frequency parts.

Figure 4B illustrates an example of a multiplexing arrangement for clustered transmission with parallel multiplexing. Figure 4B is otherwise similar to the Figure 4A, but no multiplexer is provided in parallel transmission and instead of one DFT block, two DFT blocks are provided: one for periodic PUSCH and another one for aperiodic PUSCH.

First embodiment which relates to clustered transmission starts in block 200.

In block 202, a periodic transmission and an aperiodic transmission are configured. In practice, naturally, the number of transmissions to be configured may vary.

For the periodic information transmission, typically, a NodeB detects that a user device requires resources for transmitting periodic feedback information on PUSCH. The NodeB determines the amount of resources needed for conveying the feedback information, allocates resources from the shared uplink user traffic channel PUSCH, forms a configuration for periodic feedback on PUSCH, and transmits a configuration message. Resource allocation in general is a normal NodeB procedure. The exact implementation, such as messages exchanged, is a matter of standard selection.

For the aperiodic information transmission, typically, a NodeB detects that a user device requires resources for transmitting aperiodic information on PUSCH. The NodeB determines the amount of resources needed for conveying the information, allocates resources from the shared uplink user traffic channel PUSCH, forms a configuration for an aperiodic transmission on PUSCH, and transmits a configuration message.

In block 204, the periodic transmission and the aperiodic transmission are combined by using time division multiplexing, the time division multiplexing being carried out in a non-puncturing manner. The non-puncturing manner means that the multiplexing is carried out prior to the discrete Fourier transform (DFT), and relating to the frequency domain implementation of SC-FDMA.

Further, the periodic transmission and the aperiodic transmission may be combined not only by using serial multiplexing, but another option parallel multiplexing, is also provided, the multiplexing being carried out in a non-puncturing manner as well.

The combination of the periodic information and the aperiodic information may be carried out based on frequency domain resources corresponding to both the periodic transmission and the aperiodic transmission. Another option is to multiplex both the periodic information and the aperiodic information by means of discrete Fourier transform precoding.

As already stated above, in the clustered transmission, simultaneous transmission is allowed at the expense of cubic metric properties.

When periodic PUSCH or aperiodic PUSCH corresponding to a single SC-FDMA symbol are transmitted as a serial transmission, they are time division multiplexed (TDM) in such a way that the multiplexing is applied to modulated symbols (that is prior to the DFT). A DFT pre-coded signal is mapped into frequency pins that is to say frequency domain resources are reserved corresponding to both periodic and aperiodic PUSCH resources. Two separate parallel DFT blocks may be provided: one for the periodic PUSCH and another one for the aperiodic PUSCH.

One difference between the proposed transmission scheme that increases cubic metric and the multiplexing between control information and data as put forward in Release 8, is that in resource allocation and quality of service (QoS) provisioning for periodic PUSCH, the multiplexing of control (periodic PUSCH) and data (aperiodic PUSCH) is carried out without data puncturing which in this application is called as multiplexing in a non-puncturing manner. Therefore, no degradation to the quality of PUSCH is generated.

In block 206, the combined transmission is transmitted as a clustered transmission by using frequency domain resources corresponding to periodic and aperiodic physical uplink shared channel resources.

The embodiment ends in block 208. The embodiment is repeatable which is shown by arrow 210. Other repetition options also exist.

Second embodiment relating to localized transmission starts in block 212.

In block 214, a periodic transmission and an aperiodic transmission or a scheduling request indicator are configured. The configuration of the periodic transmission and the aperiodic transmission is similar to that of block 202. It should be understood that the aperiodic transmission and the scheduling request indicator are in this embodiment typically options to each other in the configuring.

In practice, naturally, the number of transmissions to be configured may vary.

A NodeB typically transmits a scheduling request indicator (SRI) cycle period, specific SRI subframe offset and a resource index value to a user device. The specific SRI subframe offset and the resource index value enables the user device to determine a unique combination of cyclic shift, reference signal (RS) orthogonal cover, data orthogonal cover, and resource block number for the user device to use as a resource for transmitting a SRI on physical uplink control channel (PUCCH).

If a user device has a pending scheduling request (SR) to transmit, it transmits a positive (or ON) SRI on its next available SR channel. If the user device does not have a pending SR to transmit, it transmits a negative (or OFF) SRI, or equally no transmission of a SRI takes place.

A reference signal (RS) is a pre-defined signal, known to both a transmitter and a receiver in the ends of a link. The RS is typically transmitted for the receiver being able to estimate a radio channel that is to make channel estimates. It should be appreciated that RS can also be transmitted for other purposes, such as synchronization. A RS may also be called as a pilot signal, for instance. In the LTE uplink, reference signals are used as demodulation reference signals (DM RS) on PUCCH and PUSCH, and as sounding reference signals (SRS). Additionally, reference signals are used for sequence modulation on PUCCH.

In block 216, the periodic transmission and the aperiodic transmission are combined by using time division multiplexing, the time division multiplexing being carried out in a puncturing manner.

The puncturing multiplexing is similar to the multiplexing of PUSCH in Release 8 that is to say that the aperiodic transmission is punctured into a predetermined position or data elements of the data of the periodic transmission.

In block 218, the periodic transmission and the scheduling request indicator are combined by using physical layer multiplexing in the case of a positive scheduling request indicator. This refers to some methods explained below, for instance to sending a SRI by using a reference signal.

In block 220, at least one of the combined transmissions is transmitted as a localized transmission. Typically, if a positive scheduling request indicator exists, it is combined with the periodic transmission and no aperiodic transmission is configured or transmitted. Other options also exist.

In this application, term "localized" indicates no or small cubic metric increase in a manner defined in LTE-Release 8.

For a simultaneous transmission of aperiodic PUSCH and scheduling request indicator (SRI) several options are proposed: first, conveying information on a positive SRI by means of a reference signal. That is a positive SRI is transmitted on a physical uplink control channel in parallel with a periodic information transmission by using assigned scheduling request indicator resources.

Or, the information on the positive scheduling request indicator is conveyed by modifying selection of a cyclic shift of a reference signal. For example, if the SRI is negative, an original cyclic shit is remained, and if the SRI is positive, the cyclic shift is modified, an example: if an original cyclic shift is α[0, ..., 11], in the case of a negative SRI, the new cyclic shift is α, and in the case of a positive SRI, the new cyclic shift is (α+6)mod12.

Optionally, if the SRI is negative, two reference signal blocks of two slots are left unmodulated, and if the SRI is positive, cover code [1 -1] is applied between reference signal blocks of two time slots.

Second, a higher layer SRI (a medium access control protocol data unit, MAC PDU for example) is included in predetermined periodic PUSCH messages.

Third, in the case of the localized transmission, a positive SRI is transmitted as an ACK/NACK message according to Release 8 that is to say it is punctured into a predetermined position or data elements of the data. The resources need not be the same as for ACK/NACK.

The embodiment ends in block 222. The embodiment is repeatable which is shown by arrow 224. Other repetition options also exist.

It should be appreciated that if a support for concurrent transmission of periodic PUSCH and aperiodic PUSCH exists, TDM is applied between these two transmissions or channels. On the other hand, if no support for concurrent transmission is available, the aperiodic PUSCH is prioritized and the periodic PUSCH is dropped, that is it is not transmitted.

In a further embodiment, it is determined whether a transmission is a localized or clustered transmission. The determination may be carried out by detecting the strategy used for a transmission, by using signalling information, or it can be determined in a specification of the current communication system, for example. After the determination, the combining and transmission of the first embodiment or the second embodiment are carried out according to the determination.

The multiplexing disclosed above may be configured in a semi-static manner using for instance user device specific higher layer signalling (radio resource control, RRC), or as a part of system information. A configuring parameter may be at least one of the following: 1 bit for communicating whether the case is a localized or clustered solution, 1 bit for communicating concurrent transmission of PUCCH and PUSCH, and 1 bit for multiplexing of periodic PUSCH and SRI.

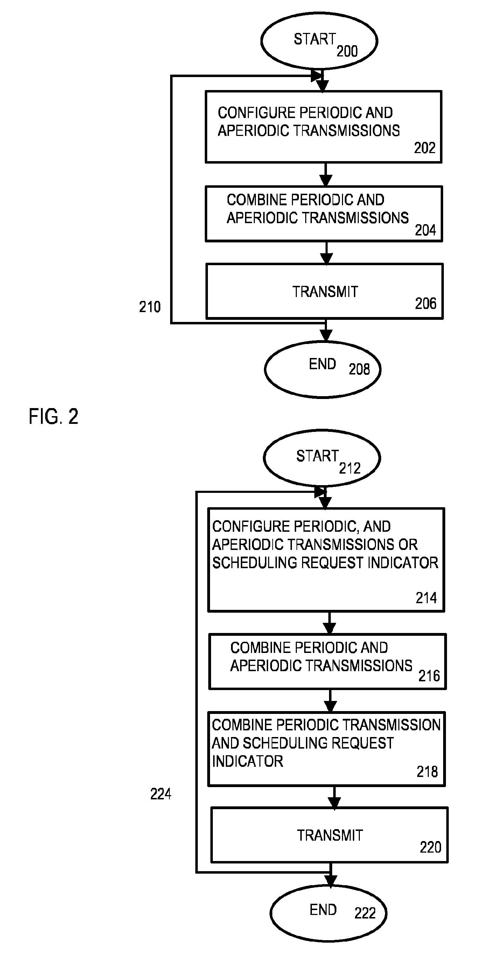

The steps/points, signaling messages and related functions described above in Figure 2 are in no absolute chronological order, and some of the steps/points may be performed simultaneously or in an order differing from the given one. Other functions can also be executed between the steps/points or within the steps/points and other signaling messages sent between the illustrated messages. Some of the steps/points or part of the steps/points can also be left out or replaced by a corresponding step/point or part of the step/point. The signaling messages are only exemplary and may even comprise several separate messages for transmitting the same information. In addition, the messages may also contain other information.

Figures 3A and 3B illustrate simplified block diagrams of an apparatus or apparatuses according to an embodiment of the invention. Although the apparatus/apparatuses has/have been depicted as one entity, different modules and memory may be implemented in one or more physical or logical entities.

The apparatus may in general include at least one processor, controller or a unit designed for carrying out control functions operably coupled to at least one memory unit and to various interfaces. Further, the memory units may inlcude volatile and/or non-volatile memory. The memory unit may store computer program code and/or operating systems, information, data, content or the like for the processor to perform operations according to embodiments. Each of the memory units may be a random access memory, hard drive, etc. The memory units may be at least partly removable and/or detachably operationally coupled to the apparatus.

The apparatus may be a software application, or a module, or a unit configured as arithmetic operation, or as a program (including an added or updated software routine), executed by an operation processor. Programs, also called program products or computer programs, including software routines, applets and macros, can be stored in any apparatus-readable data storage medium and they include program instructions to perform particular tasks. Computer programs may be coded by a programming language, which may be a high-level programming language, such as C, Java, etc., or a low-level programming language, such as a machine language, or an assembler.

Modifications and configurations required for implementing functionality of an embodiment may be performed as routines, which may be implemented as added or updated software routines, application circuits (ASIC) and/or programmable circuits. Further, software routines may be downloaded into an apparatus.

The apparatus may be implemented as a computer, processor or microprosessor, such as a single-chip computing element, or as a chipset, including at least one memory for providing storage capacity.

As an example of an apparatus according to an embodiment it is shown an apparatus, such as a user device or user terminal, including common reception 306 and transmission 304 parts etc, and facilities in a control unit 302 to carry out functions of embodiments, such as configuring and combining. This is depicted in Figure 3A.

According to Figure 3B, the apparatus 300 or 302 comprises (depending on the embodiment) a configurer 302A configured to configure a periodic information transmission and an aperiodic information transmission or, in one embodiment, instead of the aperiodic transmission, a scheduling request indicator, a first combiner 302C configured to combine for transmission the periodic information transmission and the aperiodic information transmission by using time division multiplexing, the time division multiplexing being carried out either in a non-puncturing manner or in a puncturing manner, and in one embodiment, a second combiner 302D configured to combine the periodic transmission and the scheduling request indicator by using physical layer multiplexing in the case of a positive scheduling request indicator, and a transmitting unit 302E configured to transmit at least one of the combined transmissions as a clustered transmission by using frequency domain resources corresponding to periodic and aperiodic physical uplink shared channel resources or as a localized transmission.

In a further embodiment, the apparatus also comprises a determiner 302B configured to determine whether a transmission is to be transmitted as a localized or clustered transmission, and a controller 302B configured to convey the transmission to at least one combiner and a transmitting unit suitable for processing the transmission according to the determination.

Some differences between embodiments have been illustrated by using dotted lines in the blocks. Different embodiments have been explained in further detail in relation to Figure 2.

It should be appreciated that different units, such as the determiner, the configurer and the combiners, may be implemented as one module, unit, processor, etc, or as a combination of several modules, units, processor, etc. It should be noted that terms "first" and "second" do not necessarily refer to separate physical units, but functional blocks, parts of a computer program, or like.

Another example of an apparatus comprises (depending on the embodiment) means (302A) for configuring a periodic information transmission and an aperiodic information transmission, or in one embodiment, instead of the aperiodic transmission, a scheduling request indicator, means (302C) for combining the periodic information transmission and the aperiodic information transmission by using time division multiplexing, the time division multiplexing being carried out either in a non-puncturing manner or in a puncturing manner, and in one embodiment, means (302D) for combining the periodic transmission and the scheduling request indicator by using physical layer multiplexing in the case of a positive scheduling request indicator, and means (302E) for transmitting at least one of the the combined transmission as a clustered transmission by using frequency domain resources corresponding to periodic and aperiodic physical uplink shared channel resources or as a localized transmission.

In a further embodiment, the apparatus also comprises means (302B) for determining whether a transmission is to be transmitted as a localized or clustered transmission, and means (302B) for conveying the transmission to a combiner and a transmitting unit suitable for processing the transmission according to the determination.

It is appreciated that all the combiners and means for combining may locate in a same module or unit or be separate modules or units in all combinations.

Since the combining may at least partly be carried out by multiplexing, combiners or means for combining may be a multiplexer depicted in Figure 4A or be at least a part of it.

It should be understood that the apparatuses may include other units or modules etc. used in or for transmission. However, they are irrelevant to the embodiments and therefore they need not to be discussed in more detail herein. Transmitting may herein mean transmitting via antennas to a radio path, carrying out preparations for physical transmissions or transmission control depending on the implementation, etc.

An embodiment provides a computer program embodied on a distribution medium, comprising program instructions which, when loaded into an electronic apparatus, constitute the apparatus as explained above.

Another embodiment provides a computer program embodied on a computer readable medium, configured to control a processor to perform embodiments of the method described above.

The computer program may be in source code form, object code form, or in some intermediate form, and it may be stored in some sort of carrier or a distribution medium, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital computer or it may be distributed amongst a number of computers. The computer readable medium may be a record medium, computer memory, read-only memory and software distribution package.

The techniques described herein may be implemented by various means. For example, these techniques may be implemented in hardware (one or more devices), firmware (one or more devices), software (one or more modules), or combinations thereof. For a hardware implementation, the apparatus may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g., procedures, functions, and so on) that perform the functions described herein. The software codes may be stored in a memory unit and executed by processors. The memory unit may be implemented within the processor or externally to the processor. In the latter case it can be communicatively coupled to the processor via various means, as is known in the art. Additionally, the components of systems described herein may be rearranged and/or complimented by additional components in order to facilitate achieving the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways. The invention and its embodiments are not limited to the examples described above but may vary within the scope of the claims.

## Claims

1. An apparatus comprising:
a configurer configured to configure a periodic transmission and an aperiodic transmission or a scheduling request indicator;
a first combiner configured to combine the periodic transmission and the aperiodic transmission by using time division multiplexing, the time division multiplexing being carried out in a puncturing manner;
a second combiner configured to combine the periodic transmission and the scheduling request indicator by using physical layer multiplexing in the case of a positive scheduling request indicator; and
a transmitting unit configured to transmit as a localized transmission at least one of the combined transmissions.

2. The apparatus of claim 1, wherein the positive scheduling request indicator is transmitted on a physical uplink control channel in parallel with the periodic information transmission for a physical uplink shared channel by using assigned scheduling request indicator resources.

3. The apparatus of any claim 1, wherein the combination of the periodic information and the aperiodic information is carried out by applying the time division multiplexing to modulated symbols.

4. The apparatus of any of claim 1, wherein the information on the positive scheduling request indicator is conveyed by modifying selection of a cyclic shift of a reference signal or by applying a cover code between reference signal blocks of two time slots.

5. The apparatus of claim 1, wherein, in the case of a localized transmission, the information on the positive scheduling request indicator is conveyed by transmitting it as an acknowledgement/no-acknowledgement (ACK/NACK) message.

6. The apparatus of claim 1, wherein the information on the negative scheduling indicator is conveyed by using unmodulated reference signal blocks between two time slots.

7. The apparatus of any of the preceding claims, the apparatus comprising a user terminal.

8. A computer program comprising program instructions which, when loaded into the apparatus, cause the apparatus to perform the process of any preceding claim 1 to 6

9. A method comprising:
configuring a periodic transmission and an aperiodic transmission or a scheduling request indicator;
combining the periodic transmission and the aperiodic transmission by using time division multiplexing, the time division multiplexing being carried out in a puncturing manner;
combining the periodic transmission and the scheduling request indicator by using physical layer multiplexing in the case of a positive scheduling request indicator; and
transmitting as a localized transmission at least one of the combined transmissions.

10. The method of claim 9, wherein the positive scheduling request indicator is transmitted on a physical uplink control channel in parallel with the periodic information transmission for a physical uplink shared channel by using assigned scheduling request indicator resources.

11. The method of any claim 9, wherein the combination of the periodic information and the aperiodic information is carried out by applying the time division multiplexing to modulated symbols.

12. The method of claim 9, wherein the information on the positive scheduling request indicator is conveyed by modifying selection of a cyclic shift of a reference signal or by applying a cover code between reference signal blocks of two time slots.

13. The method of claim 9, wherein, in the case of a localized transmission, the information on the positive scheduling request indicator is conveyed by transmitting it as an acknowledgement/no-acknowledgement (ACK/NACK) message.

14. The method of claim 9, wherein the information on the negative scheduling indicator is conveyed by using unmodulated reference signal blocks between two time slots.

15. An apparatus comprising:
means for configuring a periodic transmission and an aperiodic transmission or a scheduling request indicator;
means for combining the periodic transmission and the aperiodic transmission by using time division multiplexing, the time division multiplexing being carried out in a puncturing manner;
means for combining the periodic transmission and the scheduling request indicator by using physical layer multiplexing in the case of a positive scheduling request indicator; and
means for transmitting as a localized transmission at least one of the combined transmissions.
